# EUROPÄISCHE PATENTSCHRIFT

(11) **EP 2 823 979 B1**
(45) Veröffentlichungstag und Bekanntmachung des Hinweises auf die Patenterteilung: **03.05.2017**
(21) Anmeldenummer: 13175893.0
(22) Anmeldetag: 10.07.2013
(51) Int. Cl.: B60K 15/03, B65D 6/00, B65D 6/34, F17C 1/16, B29C 51/12

(54) **Zuganker, Kunststofftank und Verfahren zur Herstellung eines Kunststofftanks**
Tie rod, plastic tank and method for the preparation of a plastic tank
Ancre de traction, réservoir en matière synthétique et procédé de fabrication d'un réservoir en matière synthétique

(43) Veröffentlichungstag der Anmeldung: 14.01.2015
(73) Patentinhaber: Magna Steyr Fuel Systems GesmbH, 8261 Sinabelkirchen (AT)
(72) Erfinder: Kahler, Bernd, 8020 Graz (AT); Pozgainer, Günther, 8045 Graz (AT)
(74) Vertreter: Zangger, Bernd

(56) Entgegenhaltungen:
- WO-A1-2012/139962
- US-A- 3 774 812
- US-A1- 2002 100 759

## Beschreibung

### Gebiet der Erfindung

Die vorliegende Erfindung betrifft einen Zuganker für einen Kunststofftank. Die Erfindung betrifft auch einen Kunststofftank mit einem solchen Zuganker und ein Verfahren zur Herstellung eines solchen Kunststofftanks.

### Stand der Technik

Kunststofftanks, insbesondere Druckkunststoffkraftstofftanks (DKKB), werden zur Aufnahme von auf die Tankschalen einwirkenden Zugkräften bekannterweise mit Zugankern ausgestattet. Die Zuganker werden üblicherweise aus dem selben Material wie die Tankschalen gefertigt, insbesondere aus High Density Polyethylen (HDPE). Zuganker aus HDPE können bei der Herstellung der Tankschalen in diese eingeschweißt werden und sind daher kostengünstig zu fertigen.

Ein Zuganker aus Kunststoff ist beispielsweise aus der US 6 338 420 B1 bekannt. Diese beschreibt einen Kunststoff-Kraftstofftank für ein Kraftfahrzeug, umfassend einen hohlen Kunststoff-Behälterkörper mit einem Boden und einer Oberseite und eine Kunststoff Strebe in dem hohlen Behälterkörper, deren oberer Fuß schmelzverbunden mit der Oberseite des Tanks und deren unterer Fuß schmelzverbunden mit dem Boden des Tanks ist.

Zuganker aus Kunststoff zeigen jedoch unter Kraftstoffeinwirkung ein Quellverhalten, sodass die Zuganker und hiermit auch die Kunststofftanks im Lauf der Zeit verformt werden.

Aus der gattungsbildenden WO 2012/139962 A1 ist ein Kraftstofftank mit einem Verstärkungselement bekannt, wobei das Verstärkungselement eine hohle Säule aufweist. Die Säule kann aus zwei verschiedenen Materialien bestehen. Aus der US 3 774 812 A ist ein Behälter bekannt der durch Rotationsgießen hergestellt wird, umfassend eine innere Stütze die beim Gießprozess befestigt wird.

Die US 2002/100759 A1 offenbart eine innere Verstärkungsstruktur eines Kunststoffbehälters, wobei Wände des Behälters eine nach innen vorstehende Einbuchtung bilden.

### Zusammenfassung der Erfindung

Es ist eine Aufgabe der Erfindung, Zuganker für Kunststofftanks zu verbessern und insbesondere Zuganker anzugeben, die verbesserte Langzeiteigenschaften unter Kraftstoffeinwirkung aufweisen, die weniger zu Verformungen neigen, die geringen Bauraumbedarf und geringes Gewicht haben und einfach herstellbar sind. Es ist auch eine Aufgabe der Erfindung einen verbesserten Kunststofftank und ein Verfahren zur Herstellung eines Kunststofftanks anzugeben.

Die Lösung der Aufgabe erfolgt durch einen Zuganker für einen Kunststofftank, wobei der Zuganker stirnseitige Endflächen aus Kunststoff aufweist und zwischen den stirnseitigen Endflächen einen Mittelteil aus einem Metall aufweist, wobei die stirnseitigen Endflächen die Abschlüsse von stirnseitigen Endabschnitten darstellen, wobei der Mittelteil ein Metallstab ist und die Endabschnitte durch Lochbleche gebildet sind, die mit Kunststoff umspritzt sind.

Erfindungsgemäß weist ein Zuganker zwar Endflächen aus Kunststoff auf, und ist somit einfach mit dem Kunststofftank verbindbar, insbesondere mit der Tankschale des Kunststofftanks verschweißbar. Der Zuganker ist aber erfindungsgemäß nicht durchgängig aus Kunststoff gefertigt, sondern weist einen Mittelteil aus Metall auf, der weitaus weniger zu Verformungen bei längerer Einwirkung von Kraftstoff neigt als ein entsprechender Kunststoffteil.

Die Lösung der Aufgabe erfolgt auch durch einen Kunststofftank, wobei der Kunststofftank eine Tankschale aus Kunststoff und zumindest einen erfindungsgemäßen Zuganker aufweist. Die Tankschale kann dabei insbesondere aus HDPE bestehen.

Die Lösung der Aufgabe erfolgt auch durch ein Verfahren zur Herstellung eines solchen Kunststofftanks, wobei die Endflächen des Zugankers bei der Herstellung der Tankschale mit dieser verschweißt werden. Dadurch wird eine besonders kostengünstige Herstellung eines formstabilen Kunststofftanks ermöglicht.

Weiterbildungen der Erfindung sind in den abhängigen Ansprüchen, der Beschreibung sowie den beigefügten Zeichnungen angegeben.

Erfindungsgemäß stellen die stirnseitigen Endflächen die Abschlüsse von stirnseitigen Endabschnitten der Zuganker dar.

Dabei können die Endabschnitte und/oder die Endflächen aus dem selben Kunststoff bestehen, wie die Tankschale des Kunststofftanks.

Insbesondere kann der Kunststoff Polyethylen, bevorzugt High Density Polyethylen (HDPE) sein.

Erfindungsgemäß ist der Mittelteil des Zugankers ein Metallstab. Dieser kann dünn ausgeführt sein und verdrängt durch diese Geometrie wenig Tankvolumen bei guter Festigkeit.

Erfindungsgemäß sind die Endabschnitte des Zugankers durch Lochbleche gebildet, die mit Kunststoff umspritzt sind. Auf diese Weise wird eine einfache Verbindung zwischen Metall und Kunststoff des Zugankers hergestellt und dabei ein geringes Gewicht des Zugankers gewährleistet. Ein Zuganker mit derartigen Endabschnitten verwendet erfindungsgemäß einen Metallstab als Mittelteil.

### Kurzbeschreibung der Zeichnungen

Die Erfindung wird im Folgenden beispielhaft unter Bezugnahme auf die Zeichnungen beschrieben.
- Fig. 1a: ist eine dreidimensionale Darstellung eines Zugankers aus dem Stand der Technik.
- Fig. 1b: ist eine Vorderansicht eines Zugankers gemäß Fig. 1a.
- Fig. 1c: ist eine Schnittansicht eines Zugankers gemäß A-A der Fig. 1b.
- Fig. 2a: ist eine dreidimensionale Darstellung eines erfindungsgemäßen Zugankers nach einer ersten Ausführungsform.
- Fig. 2b: ist eine Vorderansicht eines Zugankers gemäß Fig. 2a.
- Fig. 2c: ist eine Schnittansicht eines Zugankers gemäß A-A der Fig. 2b.
- Fig. 3a: ist eine dreidimensionale Darstellung eines nicht erfindungsgemäßen Zugankers.
- Fig. 3b: ist eine Vorderansicht eines Zugankers gemäß Fig. 3a.
- Fig. 3c: ist eine Schnittansicht eines Zugankers gemäß A-A der Fig. 3b.
- Fig. 4: ist eine Schnittansicht eines Teiles eines erfindungsgemäßen Kunststofftanks mit einem Zuganker gem. Fig. 2c.

### Detaillierte Beschreibung der Erfindung

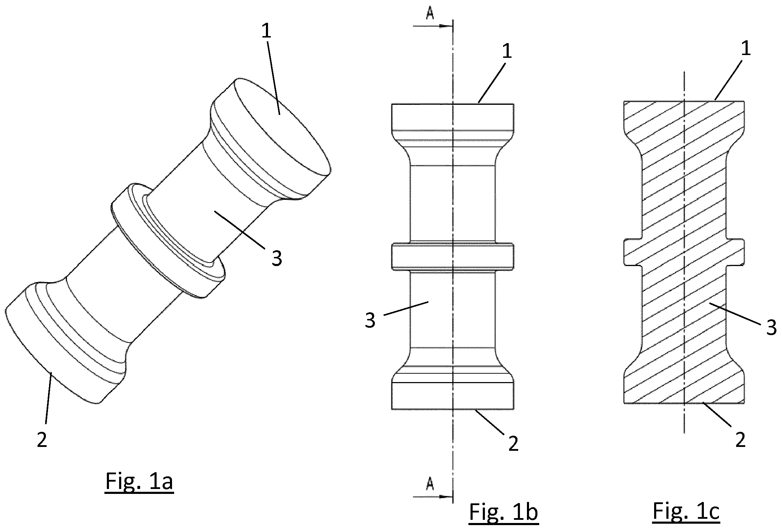

In Fig. 1a, b und c ist ein bekannter Zuganker dargestellt. Der Zuganker ist einstückig aus HDPE hergestellt. Die stirnseitigen Endflächen 1 und 2 des Zugankers bestehen daher ebenfalls aus HDPE und können mit einem Kunststofftank verschweißt werden. Der Mittelteil 3 des Zugankers ist ein HDPE Vollmaterial.

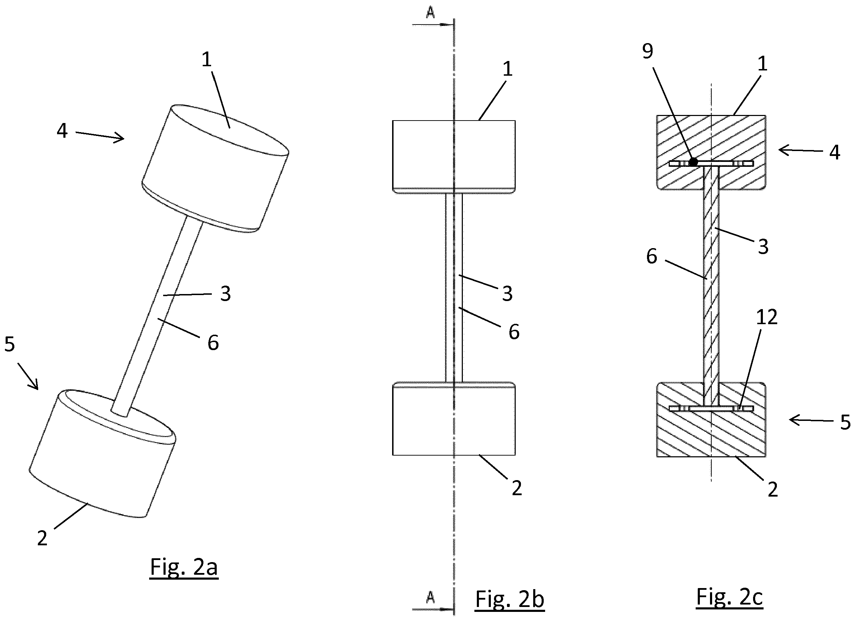

Fig. 2a, b und c zeigen einen erfindungsgemäßen Zuganker. Der Zuganker weist stirnseitige Endflächen 1, 2 aus Kunststoff auf und zwischen den stirnseitigen Endflächen 1, 2 einen Mittelteil 3 aus einem Metall. Dazu wird in der dargestellten Ausführungsform ein dünner Metallstab 6 als Mittelteil 3 verwendet, der an beiden Enden Lochbleche 9 aufweist. Löcher 12 sind beispielsweise rotationssymmetrisch an den Lochblechen 9 verteilt. Die Lochbleche 9 sind mit Kunststoff umspritzt, so dass jeweils ein Lochblech 9 und eine Kunststoffumspritzung zusammen einen Endabschnitt 4, 5 bilden. Die Endflächen 1 und 2 der Endabschnitte 4 und 5 bestehen daher aus Kunststoff, insbesondere aus HDPE.

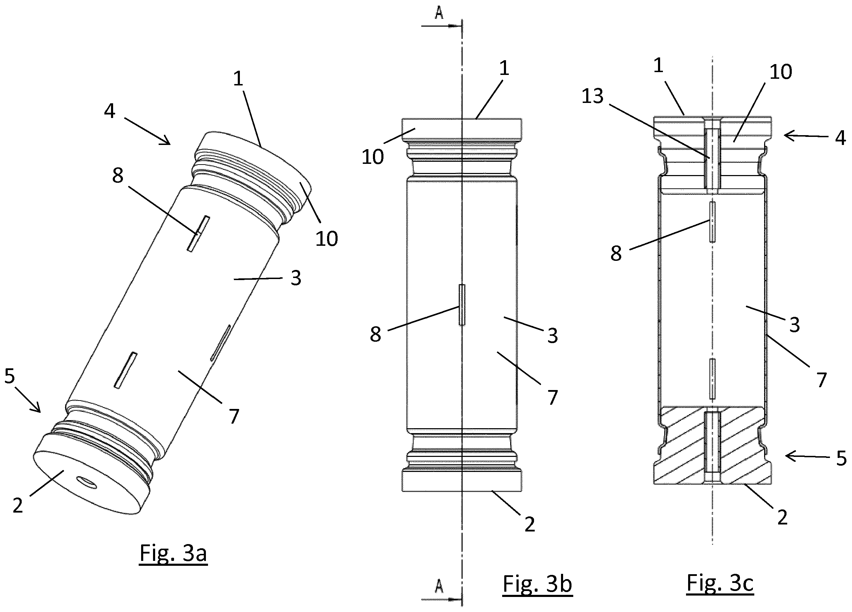

In der nicht erfindungsgemäßen Ausführungsform der Fig. 3 wird als Mittelteil 3 ein Metallrohr 7 mit Öffnungen 8 verwendet. Die Öffnungen 8 sind als Schlitze ausgeführt, die an axial und umfänglich verschiedenen Positionen am Metallrohr 7 verteilt sind. Durch diese Öffnungen 8 kann Kraftstoff in das Innere des Metallrohres 7 gelangen, so dass dessen Volumen nur wenig Tankvolumen verdrängt. Die Endabschnitte 4, 5 des Zugankers sind hier als HDPE Spritzgussteile 10 ausgebildet, die auf die Enden des Metallrohres 7 gecrimpt sind. Die Spritzgussteile 10 können zur Versteifung auch im Zentrum der Spritzgussteile angeordnete Stützhülsen 13 aufweisen.

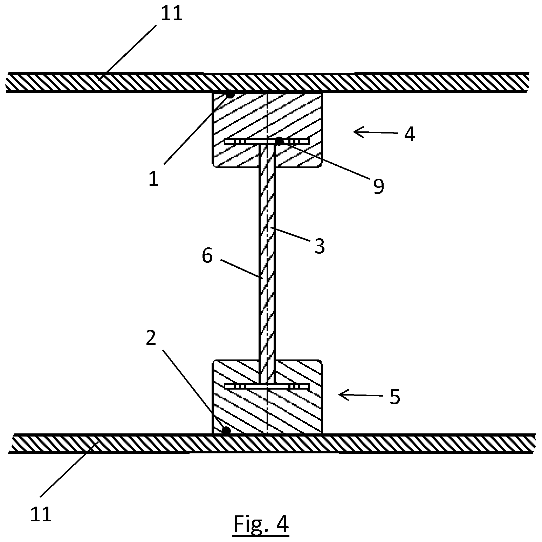

Fig. 4 zeigt schließlich einen erfindungsgemäßen Zuganker, entsprechend Fig. 2c, eingebaut in einen Kunststofftank. Der Kunststofftank weist eine obere und eine untere Tankschale 11 aus HDPE auf. Beiderseits mit der Tankschale verschweißt sind die Endflächen 1 und 2 des erfindungsgemäßen Zugankers.

### Bezugszeichenliste

- 1: Endfläche
- 2: Endfläche
- 3: Mittelteil
- 4: Endabschnitt
- 5: Endabschnitt
- 6: Metallstab
- 7: Metallrohr
- 8: Öffnung
- 9: Lochblech
- 10: Spritzgussteil
- 11: Tankschale
- 12: Loch
- 13: Stützhülse

## Patentansprüche

1. Zuganker für einen Kunststofftank,
wobei der Zuganker stirnseitige Endflächen (1, 2) aus Kunststoff aufweist und zwischen den stirnseitigen Endflächen (1, 2) einen Mittelteil (3) aus einem Metall aufweist, wobei die stirnseitigen Endflächen (1, 2) die Abschlüsse von stirnseitigen Endabschnitten (4, 5) darstellen, **dadurch gekennzeichnet, dass** der Mittelteil (3) ein Metallstab (6) ist und die Endabschnitte (4, 5) durch Lochbleche (9) gebildet sind, die mit Kunststoff umspritzt sind.

2. Zuganker nach Anspruch 1,
**dadurch gekennzeichnet, dass** der Kunststoff High Density Polyethylen ist.

3. Kunststofftank,
**dadurch gekennzeichnet, dass** der Kunststofftank eine Tankschale (11) aus Kunststoff und zumindest einen Zuganker nach zumindest einem der vorhergehenden Ansprüche aufweist.

4. Verfahren zur Herstellung eines Kunststofftanks nach Anspruch 3,
**dadurch gekennzeichnet, dass** die Endflächen (1, 2) des Zugankers bei der Herstellung der Tankschale (11) mit dieser verschweißt werden.

## Claims

1. Tie rod for a plastic tank,
wherein the tie rod has end faces (1, 2) made of plastic and between the end faces (1, 2) has a central part (3) made of a metal, wherein the end faces (1, 2) represent the terminations of end portions (4, 5), **characterized in that** the central part (3) is a metal bar (6) and the end portions (4, 5) are formed by perforated metal plates (9), which are encapsulated with plastic by injection moulding.

2. Tie rod according to Claim 1,
**characterized in that** the plastic is high density polyethylene.

3. Plastic tank,
**characterized in that** the plastic tank has a tank shell (11) made of plastic and at least one tie rod according to at least one of the preceding claims.

4. Process for producing a plastic tank according to Claim 3,
**characterized in that** the end faces (1, 2) of the tie rod are welded to the tank shell (11) during the production of the latter.

## Revendications

1. Ancre de traction pour un réservoir en matière synthétique, l'ancre de traction présentant des surfaces d'extrémité frontales (1, 2) en matière synthétique et, entre les surfaces d'extrémité frontales (1, 2), une partie centrale (3) en métal, les surfaces d'extrémité frontales (1, 2) constituant les terminaisons de portions d'extrémité frontales (4, 5), **caractérisée en ce que** la partie centrale (3) est une barre métallique (6) et les portions d'extrémité (4, 5) sont formées par des tôles perforées (9) qui sont surmoulées avec une matière synthétique.

2. Ancre de traction selon la revendication 1,
**caractérisée en ce que** la matière synthétique est du polyéthylène haute densité.

3. Réservoir en matière synthétique,
**caractérisé en ce que** le réservoir en matière synthétique présente une coque de réservoir (11) en matière synthétique et au moins une ancre de traction selon au moins l'une quelconque des revendications précédentes.

4. Procédé de fabrication d'un réservoir en matière synthétique selon la revendication 3, **caractérisé en ce que** les surfaces d'extrémité (1, 2) de l'ancre de traction, lors de la fabrication de la coque de réservoir (11), sont soudées à celle-ci.
